# EUROPÄISCHE PATENTSCHRIFT

(11) **EP 0 886 481 B1**
(45) Veröffentlichungstag und Bekanntmachung des Hinweises auf die Patenterteilung: **03.05.2000**
(21) Anmeldenummer: 97902352.0
(22) Anmeldetag: 08.02.1997
(51) Int. Cl.: A45C 11/00

(54) **SCHUTZHÜLLE FÜR HANDDIKTIERGERÄTE**
PROTECTIVE CASE FOR HAND-HELD DICTATING APPARATUS
BOITIER DE PROTECTION POUR APPAREIL A DICTER TENU A LA MAIN

(30) Priorität: 14.03.1996 DE 19610026
(43) Veröffentlichungstag der Anmeldung: 30.12.1998
(73) Patentinhaber: GRUNDIG Aktiengesellschaft, 90762 Fürth (DE)
(72) Erfinder: MODSCHIEDLER, Reinhard, D-90513 Zirndorf (DE); RETTIG, Jürgen, D-91244 Reichenschwand (DE); KOSCHNIK, Dörte, D-13465 Berlin (DE)
(74) Vertreter: Pröll, Jürgen, Dipl.-Ing. (FH)
(86) Internationale Anmeldenummer: EP9700571
(87) Internationale Veröffentlichungsnummer: WO9733497

(56) Entgegenhaltungen:
- EP-A- 0 004 683
- DE-A- 3 538 829
- DE-A- 3 921 781
- DE-U- 9 412 178
- FR-A- 2 273 298

## Beschreibung

Die Erfindung betrifft eine Schutzhülle eines Gerätes nach dem Oberbegriff des Anspruches 1.

Es ist bekannt, Schutzhüllen, insbesondere Transportschutzhüllen für elektrische Kleingeräte, beispielsweise Handdiktiergeräte, Mobilfunktelefone, Taschenrechner usw. vorzusehen. Vielfach werden als Materialien für die Schutzhülle Ledertaschen verwendet, die gegebenenfalls im Bereich der Anzeigeeinheiten oder im Tastaturbereich Aussparungen aufweisen, so daß ein Gebrauch des Gerätes auch möglich ist, wenn es sich in der Schutzhülle befindet. Anstelle von Leder sind die Schutzhüllen häufig auch aus anderen Materialien gefertigt, die ähnliche Eigenschaften aufwiesen.

Neben dem Gebrauch von Einstecktaschen ist es auch bekannt, Schutzhüllen aus Hartplastik zu verwenden. Diese weisen den Vorteil auf, daß sie das Gerät bei einem Stoß oder Fall besser schützen. Das Gerät kann in der Schutzhülle spielfrei gelagert werden, wobei auch die Möglichkeit einer Polsterung besteht.
Der Nachteil bei Hartplastikschutzhüllen besteht darin, daß sie zumeist aus mindestens zwei Teilen gefertigt sind, von denen das eine Teil zum Einschieben des Gerätes dient, wobei das Gerät in der Regel teilweise formschlüssig von der Hülle umschlossen ist, so daß auch hier die Anzeigeund Bedienelemente im geöffneten Zustand der Schutzhülle zugänglich sind.
Der andere Teil der Schutzhülle ist in der Regel als Abdeckung ausgeführt, die beim Transport oder zur Aufbewahrung des Geräts auf den ersten Teil aufgesetzt wird.

Der Nachteil dieser Schutzhüllen besteht darin, daß das Abdeckteil der Schutzhülle entweder über eine flexible Verbindung mit dem Basisteil verbunden ist und das Gerät beim Betrieb entweder ganz aus der Schutzhülle entnommen werden muß oder beim Betrieb im Basisteil der Schutzhülle die Abdeckung störend wirkt. Im anderen Fall sind Basis- und Abdeckteil nicht miteinander verbunden, dann besteht jedoch der Nachteil, daß beim Betrieb des Gerätes im Basisteil das Abdeckteil lose ist.

Aus DE-A-39 21 781 ist ein Etui far Gegenstände aller Art, insbesondere far Schreib-, Zeichen- oder Malgeräte bekannt. Der Deckel und das Bodenteil des Etui sind jeweils mit Führungsnuten und Führungszapfen an zwei gegenüberliegenden Seiten miteinander verbunden und gegeneinander verschwenkbar und verschiebbar, wobei das Bodenteil auf dem Deckel zu liegen kommt. Der Deckel und das bodenteil sind derart gestaltet, daß in geöffneter Position des Etui das Bodenteil mit seiner Unterseite auf die Oberseite des Deckels zu liegen kommt.

Nachteilig bei dieser Erfindung ist aber, daß hierbei nicht auf die Erfordernisse von elektrischen Geräten geachtet wurde. Das Etui dient lediglich zur Aufnahme von Gegenständen ohne Bedienelemente. Werden Geräte mit Bedienelementen in das Etui eingebracht, können diese mit externen Einheiten nicht verbunden werden.

Es ist daher Aufgabe der Erfindung, eine Schutzhülle eine Handdiktiergerätes anzugeben, bei welchem die oben genannten Nachteile vermieden werden. Insbesondere soll die Möglichkeit bestehen, daß das Handdiktiergerät in der Schutzhülle kontaktiert und mit externen Einheiten verbunden werden kann.

Diese Aufgabe wird gemäß der Erfindung ausgehend von den Merkmalen des Anspruches 1 gelöst.
Vorteilhafte Ausgestaltungen der Erfindung sind in den abhängigen Ansprüchen angegeben.
Gemäß der Erfindung ist das Oberteil der Schutzhülle so ausgeführt, daß es auch am Boden des Unterteils anlegbar ist, wobei das Oberteil so angelegt wird, daß das Kopfteil des Unterteiles erhöht ist.
Auf diese Weise wird zum einen erreicht, daß das Oberteil beim Betrieb des Handdiktiergerätes, im ins Unterteil eingeschobenen Zustand, mit dem Unterteil verbunden ist, wodurch sich die Gefahr vermindert, daß das Oberteil verloren geht.
Zum anderen führt die Erhöhung des Kopfteils des Unterteils zu einer Stellung, in der das Handdiktiergerät, wenn es in das Unterteil eingeschoben ist, dem Benutzer zugeneigt ist. Das ermöglicht eine leichtere Bedienung und erhöht die Ablesbarkeit von einer gegebenenfalls vorhandenen Anzeigeeinheit.

Das Oberteil enthält lösbare Befestigungsmittel, die mit Befestigungsmitteln am Unterteil zusammenwirken, um eine lösbare Verbindung zu erhalten. Die Befestigungsmittel am Unterteil sind sowohl an der Oberseite zum Schließen der Schutzhülle, als auch an der Unterseite zur Befestigung des Oberteils an der Unterseite angeordnet. Auf diese Weise wird eine stabile Verbindung des Oberteils mit dem Unterteil gewährleistet.

Es hat sich weiterhin als vorteilhaft erwiesen, die Befestigungsmittel am Ober- und Unterteil als Steckverbindungen auszuführen, da diese Verbindungen auch nach oftmaligem Gebrauch zuverlässig wirken und eine einfache Bedienung gewähren.

Im weiteren enthält das Unterteil ein Ladegerät zur Stromversorgung und Aufladung eines akkubetriebenen Handdiktiergerätes, wobei am Unterteil elektrische Verbindungen für die Stromversorgung des Handdiktiergerätes und/oder für Steuerleitungen angeordnet sind, die beim Einschieben des Handdiktiergerätes kontaktiert werden.

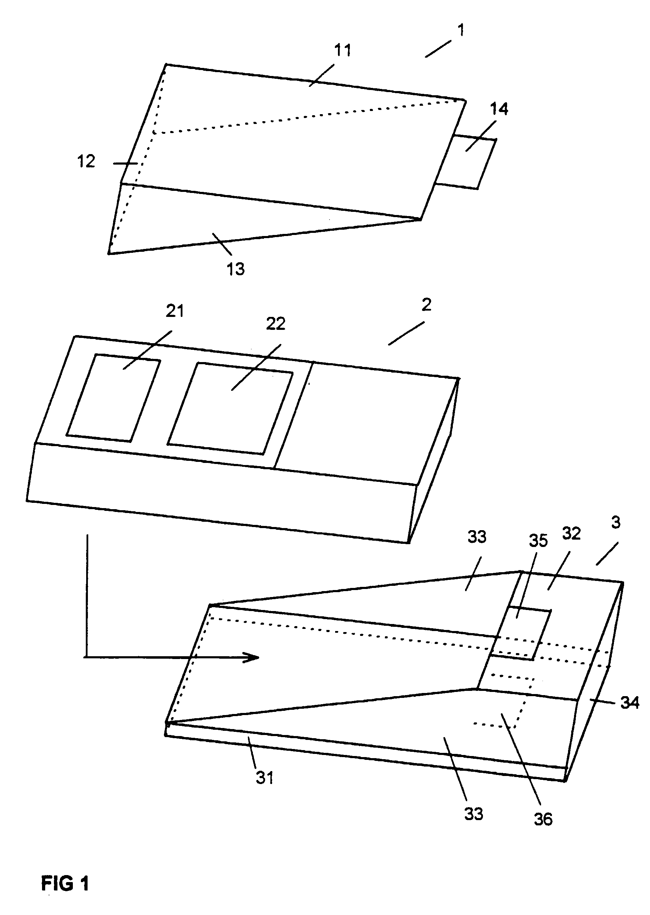

Im folgenden wird die Erfindung an Hand der Figur 1 beschrieben:
Diese Figur zeigt in schematischer Darstellung eine erfindungsgemäße Schutzhülle 1,3 sowie ein Handdiktiergerät 2. Das Oberteil 1 der Schutzhülle besteht aus einem oberen Flächenbereich 11, einer Vorderseite 12 und den Seitenteilen 13 sowie einer Befestigungslasche 14. Es können weitere lösbare Befestigungselemente an der Vorderseite 12 oder den Seitenteilen 13 angeordnet sein, die mit entsprechenden Befestigungselementen des Unterteils 3 zusammenwirken.

Das Unterteil 3 besteht aus einem Bodenteil 31, einem oberen Abdeckteil 32, den Seitenteilen 33 und einer hinteren Abschlußfläche 34. Es weist weiterhin im oberen Abdeckteil 32 ein Befestigungselement 35 und im Bodenteil 31 ein Befestigungselement 36 auf, die beide so ausgeführt sind, daß sie mit der Befestigungslasche 14 des Oberteils 1 zusammenwirken.

Beim Aufsetzen des Oberteils 1 auf das Unterteil 3 entsteht eine abgeschlossene oder zumindest weitgehend abgeschlossene Schutzhülle, die ein Handdiktiergerät 2, das in Pfeilrichtung in das Unterteil 3 eingeschoben wird, umgibt. Als zusätzliche Sicherung zum Schutz des Handdiktiergerätes bei Stoß oder Fall können innerhalb der Schutzhülle Dämpfungselemente bekannter Art eingesetzt werden.

Bei abgenommenem Oberteil 1 und in das Unterteil 3 eingeführten Handdiktiergerät 2 bleiben Bedienelemente 22 und eine Anzeigeeinheit 21 für den Bediener zugänglich.

Der Bedienkomfort und die Ablesbarkeit der Anzeigeeinheit 21 werden erhöht, wenn das Oberteil 1 unter dem Bodenteil 31 in der Weise angelegt wird, daß der obere Flächenbereich 11 an das Bodenteil 31 angelegt wird, wobei zur Arretierung die Befestigungsfasche 14 des Oberteils 1 in das Befestigungselement 36 des Bodenteils 31 eingeschoben wird. Stellt man das Handdiktiergerät 2 mit dem Oberteil 1 als Auflage, auf eine Oberfläche, zum Beispiel einen Tisch, ist das Bedienteil 31 weiterhin zugänglich und das Handdiktiergerät 2 kann zugleich als Tischgerät verwendet werden. Durch das Oberteil 1, das unter dem Bodenteil 31 nunmehr als Unterteil angeordnet ist, wird der Kopfteil des Handdiktiergerätes 2 erhöht.

Das Unterteil 3 kann beispielsweise durch einen Hohlraum im Bodenteil 31 so ausgebildet sein, daß darin ein Ladegerät zur Aufladung eines Akkumulators des Handdiktiergerätes 2 untergebracht werden kann.

Im weiteren sind im Unterteil 3 elektrische Anschlüsse vorgesehen, die mit elektrischen Anschlüssen des Handdiktiergerätes 2 zusammenwirken, wenn dieses in das Unterteil 3 eingeschoben ist.

## Patentansprüche

1. Schutzhülle eines Gerätes (2) bestehend aus einem Unterteil (3) und einem Oberteil (1), wobei das Unterteil (3) so ausgeführt ist, daß das Gerät (2) eingeschoben werden kann und das Unterteil (3) das Gerät (2) teilweise formschlüssig umgibt, wobei die Bedienelemente (22) und eine gegebenenfalls vorhandene Anzeigeneinheit (21) an der Frontseite bzw. in den Seitenbereichen des Gerätes (2) zugänglich bzw. sichtbar sind und das Oberteil (1) so ausgeführt ist, daß das Gerät (2) in der Schutzhülle (1, 3) im geschlossenen Zustand spielfrei gelagert ist, wobei das Oberteil (1) weiterhin so ausgeführt ist, daß das Oberteil (1) unter einem Bodenteil (31) des Unterteiles (3) in der Weise anlegbar ist, daß hierdurch ein Kopfteil des Unterteils (3) beim Abstellen auf eine Fläche erhöht ist,
**dadurch gekennzeichnet,**
daß das Gerät (2) ein elektrisch betriebenes Handdiktiergerät ist, daß im Unterteil (3) elektrische Verbindungen für eine Stromversorgung des Gerätes (2) und/oder für Steuerleitungen angeordnet sind, welche beim Einschieben des Gerätes (2) kontaktiert werden und daß ein Befestigungsmittel (14) des Oberteils (1) mit einem Befestigungsmittel (36) des Unterteils (3) zusammen eine lösbare Verbindung erwirkt.

2. Schutzhülle eines Gerätes (2) nach Anspruch 1,
**dadurch gekennzeichnet,**
daß das Befestigungsmittel (36) und ein Befestigungsmittel (35) am Unterteil (3) sowohl an der Oberseite zum Schließen der Schutzhülle, als auch an der Unterseite zur Befestigung des Oberteils (1) an der Unterseite (3) angeordnet sind.

3. Schutzhülle eines Gerätes (2) nach Anspruch 1 oder 2,
**dadurch gekennzeichnet,**
daß die Befestigungsmittel (14, 35, 36) am Ober- und Unterteil (1, 3) als Steckverbindungen ausgeführt sind.

4. Schutzhülle eines Gerätes (2) nach einem der Ansprüche 1 bis 3,
**dadurch gekennzeichnet,**
daß das Unterteil (3) ein Ladegerät zur Stromversorgung und Aufladung eines akkubetriebenen Handdiktiergerätes enthält.

## Claims

1. Protective case for an apparatus (2), the said case consisting of a lower part (3) and an upper part (1), wherein the lower part (3) is so designed that the apparatus (2) can be inserted and the said lower part (3) encloses the apparatus (2) partially in a form-locking manner, wherein the operating elements (22) and any display unit (21) which may be present on the front side or in the lateral regions of the apparatus (2) are accessible and visible, respectively, and the upper part (1) is so designed that the apparatus (2) is mounted in a clearance-free manner in the protective case (1, 3) in the closed condition, and wherein the upper part (1) is furthermore so designed that the upper part (1) can be set up under a base part (31) of the lower part (3) in such a way that, as a result of this, a top part of the lower part (3) is elevated when put down on a surface,
**characterised in that**
the apparatus (2) is an electrically operated hand-held dictating apparatus, that electrical connections for supplying current to the apparatus (2) and/or for control leads are disposed in the lower part (3), with which electrical connections contact is made when the apparatus (2) is inserted, and that a fastening means (14) belonging to the upper part (1) combines with a fastening means (36) belonging to the lower part (3) to bring about a releasable connection.

2. Protective case for an appliance (2) according to claim 1,
**characterised in that**
the fastening means (36) and a fastening means (35) on the lower part (3) are disposed both on the upper side for closing the protective case and also on the lower side for fastening the upper part (1) to the lower part (3).

3. Protective case for an apparatus (2) according to claim 1 or 2,
**characterised in that**
the fastening means (14, 35, 36) on the upper and lower parts (1, 3) are designed as plug-in connections.

4. Protective case for an apparatus (2) according to one of claims 1 to 3,
**characterised in that**
the lower part (3) contains a charging apparatus for supplying current to, and charging a battery-operated hand-held dictating apparatus.

## Revendications

1. Enveloppe de protection pour un appareil (2), constituée par une partie inférieure (3) et une partie supérieure (1), dans laquelle la partie inférieure (3) est agencée de telle sorte que l'appareil (2) peut y être inséré et la partie inférieure (3) entoure l'appareil (2) au moins en partie selon une liaison par formes complémentaires, les éléments de commande (22) et une unité d'affichage éventuellement présente (21) étant accessibles ou visibles sur la face avant ou sur les parties latérales de l'appareil (2), et la partie supérieure (1) étant agencée de telle sorte que l'appareil (2) est monté sans jeu dans l'enveloppe de protection (1,3) à l'état fermé, la partie supérieure (1) étant en outre réalisée de telle sorte que la partie supérieure (1) peut être appliquée au-dessous d'un élément de base (31) de la partie inférieure (3) de telle sorte que de ce fait une partie de tête de la partie inférieure (3) est surélevée lors de la mise en place sur une surface,
caractérisée en ce
que l'appareil (2) est un appareil à dicter tenu à la main, qui fonctionne électriquement, que dans la partie inférieure (3) sont disposées des liaisons électriques pour une alimentation en courant de l'appareil (2) et/ou pour des lignes de commande, avec lesquelles un contact est établi lors de l'insertion de l'appareil (2), et qu'un moyen de fixation (14) de la partie supérieure (1) établit, conjointement avec un moyen de fixation (36) de la partie inférieure (3), une liaison amovible.

2. Enveloppe de protection pour un appareil (2) selon la revendication 1, caractérisée en ce que le moyen de fixation (36) et un moyen de fixation (35) sur la partie inférieure (3) sont disposés aussi bien sur le côté supérieur pour la fermeture de l'enveloppe de protection que sur la face inférieure pour la fixation de la partie supérieure (1) à la partie inférieure (3).

3. Enveloppe de protection d'un appareil (2) selon la revendication 1 ou 2, caractérisée en ce que les moyens de fixation (14,35,36) sont formés sur la partie supérieure et sur la partie inférieure (1,3) sous la forme de liaisons à enfichage.

4. Enveloppe de protection d'un appareil (2) selon l'une des revendications 1 à 3, caractérisée en ce que la partie inférieure (3) contient un appareil de charge pour l'alimentation en courant et la charge d'un appareil à dicter tenu à la main, fonctionnant sur batterie.
